(19) Europäisches Patentamt
European Patent Office
Office européen des brevets

(11) **EP 0 555 721 B2**

(12) ## NEUE EUROPÄISCHE PATENTSCHRIFT

(45) Veröffentlichungstag und Bekanntmachung des Hinweises auf die Entscheidung über den Einspruch:
**19.11.2003   Patentblatt 2003/47**

(45) Hinweis auf die Patenterteilung:
**02.04.1997   Patentblatt 1997/14**

(21) Anmeldenummer: **93101516.8**

(22) Anmeldetag: **01.02.1993**

(51) Int Cl.[7]: **C08G 18/48**, C08G 18/76, C08G 18/10
 // (C08G18/48, 101:00)

(54) **Verfahren zur Herstellung von kalthärtenden Polyurethan-Weichformschaumstoffen**

Process for the preparation of cold-hardening flexible polyurethane foams

Procédé de préparation de mousses de polyuréthane flexibles durcissant à froid

(84) Benannte Vertragsstaaten:
**BE DE ES FR GB IT SE**

(30) Priorität: **14.02.1992   DE 4204395**

(43) Veröffentlichungstag der Anmeldung:
**18.08.1993   Patentblatt 1993/33**

(73) Patentinhaber: **BAYER AG**
**51368 Leverkusen (DE)**

(72) Erfinder: **Gansen, Peter, Dr.**
**D-5090 Leverkusen 1 (DE)**

(56) Entgegenhaltungen:
EP-A- 0 022 617    EP-A- 0 442 631
EP-A- 0 485 953    EP-A- 0 547 764
US-A- 3 857 800    US-A- 3 865 762

• **Kunststoff Handbuch; Teil 7; "Polyurethane"; München; Carl Hanser Verlag; 1983; Seiten 13-14 und 65**
• **"ICI POLYURETANES BOOK"; Woods, George; Chicester; John Wiley & Sons; 1987,p.71**

EP 0 555 721 B2

**Beschreibung**

Kalthärtende Polyurethan-Weichschaumstoffe finden bekanntlich eine sehr verbreitete Anwendung und werden u.a. in der Möbel- und Automobilindustrie genutzt. Bei der Anwendung als Sitzkissen oder Lehne spielt die Elastizität beziehungsweise die Dämpfung der entsprechenden Schaumstoffqualität eine entscheidende Rolle. Aus diesem Grunde werden Elastizitätskennwerte für bestimmte Schaumstoffteile spezifiziert.

Besonders elastische Schaumqualitäten werden im allgemeinen als komfortabel angesehen. Dämpfende Schaumstoffe haben den Vorteil, Schwingungen des Fahrzeugs nicht bzw abgeschwächt auf die Insassen zu übertragen. Aus diesen beiden Gründen ist es wünschenswert, die Elastizität des Schaumstoffs für einen Automobilsitz exakt auf die Anforderungen der Automobilhersteller ausrichten zu können.

Die Verfahren zur Erhöhung der Dämpfung sind bekannt und werden gezielt eingesetzt. Dämpfungsverstärkend wirkt eine Modifizierung der Zellstruktur in Richtung fein und gleichmäßig. Chemisch kann man ebenfalls die Dämpfung verstärken bzw. die Elastizität vermindern. Eine Möglichkeit besteht darin, Polyether mit OH-Zahlen größer als 200 in Anteilen von 5 bis 25 Gew.-% der sogenannten A-Komponente (Polyolkomponente) zuzugeben. Eine weitere Möglichkeit besteht darin, auf der Isocyanatseite statt TDI bzw. modifiziertem TDI, MDI einzusetzen. Die bessere Dämpfung von MDI (verglichen mit TDI) wurde bisher als ein besonderer Vorteil gewertet.

Überraschend wurde nun gefunden, daß sich bei Mitverwendung von Polyethern mit einem Ethylenoxid-Gehalt von über 50 Gew.-% auch mit MDI als Isocyanat hochelastische Schaumstoffe herstellen lassen. Oft werden dabei höhere Mengen an vernetzend wirkenden Katalysatoren oder stärker wirksame Stabilisatoren zur Anwendung gebracht.

Der Einsatz von Polyethern mit einem Ethylenoxid-Gehalt von über 50 Gew.-% in Kaltschaumformulierung ist zwar grundsätzlich bekannt. Die übliche Einsatzmenge (bezogen auf Gesamtalkylenoxid) beträgt allerdings weniger als 3 Gew.-%. Sie werden dabei als sog. Zellöffner genutzt. Setzt man in typischen Kaltformschaum-Rezepturen Polyether mit einem Ethylenoxid-Gehalt von über 50 Gew.-% in Konzentrationen von über 5 Gew.-% ein, so resultieren instabile bzw. kollabierende Schaumstoffe.

Ein Einsatz von Polyethern mit einem Ethylenoxid-Gehalt von über 50 Gew.-% in Kaltschaumrezepturen wird z. B. in der DE-OS 3 721 058 beschrieben, allerdings werden dort Wassermengen von über 5 Gew.-% eingesetzt. Solcherart hergestellte Schaumstoffe zeichnen sich nicht durch hohe Elastizität aus; sie haben vielmehr dämpfenden Charakter. Die Stabilität dieser hergestellten Schaumstoffe wird insbesondere durch extrem niedrige Kennzahlen erreicht.

Der Einsatz bzw. Zusatz von Polyethern mit einem Ethylenoxid-Gehalt von über 50 Gew.-% ist bei heißhärtenden Polyurethan-Weichformschaumstoffen bekannt, wie z.B. in der DE-OS 3 903 100 beschrieben wird. Heißhärtender Formschaumstoff wird aber üblicherweise mit anderen Rohstoffen (Polyether mit nur maximal 50 % primären OH-Gruppen, reines TDI als Isocyanat, Stabilisatoren mit stark schließender Wirkung, Mitverwendung von metallorganischen Katalysatoren) hergestellt als kalthärtender Formschaumstoff. Die andersartigen Basisrohstoffe und die spezielle Verfahrenstechnik bedingen ein anderes Wertniveau der resultierenden Schaumstoffe. Heißschaumstoff erreicht z.B. nicht die hohen Elastizitätswerte, durch die sich kalthärtender Formschaum auszeichnet.

Insbesondere wirkt sich der erfindungsgemäße Zusatz von Polyethern mit einem Ethylenoxid-Gehalt von über 50 Gew.-% in der Polyolkomponente bei Heißschaumstoffen nicht destabilisierend auf den resultierenden Schaumstoff aus. Auch werden die bei Kaltschaumstoffen sich ergebenden hohen Elastizitätswerte nicht erreicht.

Gegenstand der Erfindung ist ein Verfahren zur Herstellung von kalthärtenden Polyurethan-Weichformschaumstoffen durch Umsetzung von

a) Polyisocyanaten vom Typ Diphenylmethandiisocyanat mit einem Gehalt von 15 bis 38 Gew.-% an 2,4'-Diphenylmethan-diisocyanat

b) Verbindungen mit mindestens zwei gegenüber Isocyanaten aktiven Wasserstoffatomen vom Molekulargewicht 400 bis 14.000 und gegebenenfalls

c) Kettenverlängerungs- und Vernetzungsmitteln mit mindestens zwei gegenüber Isocyanaten aktiven Wasserstoffatomen vom Molekulargewicht 32 bis 399 in Gegenwart von

d) Wasser als Treibmittel und gegebenenfalls in Gegenwart von

e) anderen Treibmitteln, Katalysatoren und weiteren an sich bekannten Hilfs- und Zusatzmitteln

in einer geschlossenen Form, dadurch gekennzeichnet, daß man als Komponente b) ein Gemisch enthaltend

1. 5 bis 30 Gew.-% eines mindestens zwei Hydroxylgruppen aufweisenden Polyethers einer OH-Zahl < 150 und einem Ethylenoxid-Gehalt von mindestens 50 Gew.-% (bezogen auf Gesamtalkylenoxid) und

2. 70 bis 95 Gew.-% eines mindestens zwei Hydroxylgruppen aufweisenden Polyethers einer OH-Zahl 14 bis 50 und einem Ethylenoxidgehalt von 5 bis 25 Gew.-% (bezogen auf Gesamtalkylenoxid) und

und als Komponente d) Wasser in einer Menge von 2 bis 3 Gew.-%, bezogen auf Komponente b), verwendet, wobei die Umsetzung bei einer Kennzahl von 80 bis 120 erfolgt.

Erfindungsgemäß bevorzugt ist, daß

- die Komponente b) mit dem Polyisocyanat in einer Vorreaktion ganz oder teilweise zu einem Semiprepolymer oder Prepolymer umgesetzt wird, und

- die Umsetzung bei einer Kennzahl von 95 bis 105 erfolgt,

- die Funktionalität der Komponente b)2. zwischen 3 und 6 liegt.

Zur Herstellung der Polyurethan-Weichformschaumstoffe werden erfindungsgemäß als Ausgangskomponenten verwendet:

a) Polyisocyanate vom Typ des Diphenylmethandiisocyanats mit einem Gehalt von 15 bis 38 Gew.-% an 2,4'-Diphenylmethan-diisocyanat.

b) Erfindungsgemäß wird ferner das schon beschriebene spezielle Polyolgemisch eingesetzt.

c) Gegebenenfalls mitverwendet werden Verbindungen mit mindestens zwei gegenüber Isocyanaten reaktionsfähigen Wasserstoffatomen und einem Molekulargewicht von 32 bis 399. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 10 bis 20, beschrieben.

d) Wasser wird als Treibmittel in einer Menge von 2 bis 3 Gew.-%, bezogen auf Komponente b) eingesetzt.

e) Gegebenenfalls werden Hilfs- und Zusatzmittel mitverwendet wie

a) leicht flüchtige organische Substanzen als weitere Treibmittel,

b) Reaktionsbeschteuniger und Reaktionsverzögerer der an sich bekannten Art in der an sich üblichen Mengen,

c) oberflächenaktive Zusatzstoffe, wie Emulgatoren und Schaumstabilisatoren, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistastisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 bis 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerem, Stabilisatoren, flammhemmenden Substanzen, Weichmachern, Farbstoffen und Füllstoffen sowie fungistastisch und bakteriostatisch wirksamen Substanzen sowie Einzelheiten über Verwendungs- und Wirkungsweise dieser Zusatzmittel sind im Kunststoff-Handbuch, Band VII, herausgegeen von Vieweg und Höchtlen, Carl-Hanser-Verlag, München 1966, z. B. auf den Seiten 103 bis 113, beschrieben.

Durchführung des erfindungsgemäßen Verfahrens.

Die Reaktionskomponenten werden erfindungsgemäß nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Die Umsetzung aller Komponenten erfolgt erfindungsgemäß bei einer Kennzahl von 80 bis 120, vorzugsweise bei einer Kennzahl von 95 bis 105.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, beziehungsweise die theoretisch notwendige Menge an Isocyanat benutzt wurde. Mit Hilfe der Kennzahl ist es also möglich, den Grad der Unter- oder Übervernetzung näher zu definieren. Die Kennzahl errechnet sich nach der allgemeinen Formel wie folgt:

$$\text{Kennzahl} = \frac{\text{Isocyanatmenge (praktisch)}}{\text{Isocyanatmenge (theoretisch)}} \times 100$$

Erfindungsgemäß wird die Verschäumung in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, infrage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z. B. aus den US-Patentschriften 3 178 490 und 3 182 104 bekannt.

Die erfindungsgemäß erhältlichen Polyurethan-Weichformschaumstoffe finden z.B. Anwendung als Armaturentafeln, Armlehnen (auch PKW-Lehnen), Liege- und Sitzmöbel, Kopfstützen, Sitze in Verkehrsmitteln, vorzugsweise im Auto.

Ausführungsbeispiele

| | |
|---|---|
| <u>Polyol A</u> | Trimethylolpropan gestartetes Polyoxypropylenpolyoxyethylentriol mit 14 % endständig polymerisierten Oxyethylengruppen und einer OH-Zahl von 36. |
| <u>Polyol B</u> | Trimethylolpropan gestartetes Polyoxypropylenpolyoxyethylentriol mit 14 % endständig polymerisierten Oxyethylengruppen und einer OH-Zahl von 28. |
| <u>Polyol C</u> | Sorbit gestartetes Polyoxypropylenpolyoxyethylenpolyol einer OH-Zahl von 28 und mit 18 % endständig polymerisierten Oxyethylengruppen. |
| <u>Polyol D</u> | Trimethylolpropan gestartetes Polyoxypropylenpolyoxyethylentriol mit 18 % endständig polymerisierten Oxyethylengruppen und einer OH-Zahl von 36. |
| <u>Polyol E</u> | Glycerin gestartetes Polyoxypropylenpolyoxyethylentriol mit 10 % endständig polymerisierten Oxyethylengruppen, einem Gesamtgehalt an Oxyethylengruppen von 73 % und einer OH-Zahl von 36. |
| <u>Polyol F</u> | Sorbit gestartetes Polyoxypropylenpolyoxyethylenpolyol einer OH-Zahl von 100 und 82 % endständigen Oxyethylengruppen. |
| <u>Polyol G</u> | Trimethylpropan gestartetes Polyoxypropylenpolyoxyethylentriol mit 18 % endständig polymerisierten Oxyethylengruppen und einer OH-Zahl von 28. |
| <u>Katalysator 1</u> | Bis(dimethylaminoethyl)ether (70 Gew.-% in Dipropylenglykol) |
| <u>Katalysator 2</u> | Triethylendiamin (33 Gew.-% in Dipropylenglykol) |

Katalysator 3    Dimethylethanolamin

Katalysator 4    N,N-Bis(dimethylaminopropyl)formamid

Katalysator 5    N-Methyl N,N-Bis(dimethylaminopropyl)amin

Katalysator 6    Triethylamin

Katalysator 7    Bis(dimethylaminopropyl)amin

Stabilisator 1    Silikonstabilisator B 4617 der Fa. Goldschmidt, Essen

Stabilisator 2    Silikonstabilisator B 4113 der Fa. Goldschmidt, Essen

Stabilisator 3    Silikonstabilisator B 8002 der Fa. Goldschmidt, Essen

Die Beispiele kennzeichnen das erfindungsgemäße Verfahren, während die Vergleichsbeispiele nach bekannten Verfahren hergestellt wurden.

Beispiel 1

100 Gew.-Tle. der A-Komponente werden mit 48,2 Gew.-Tln. der B-Komponente intensiv vermischt (Kennzahl 95). Die Reaktionsmischung wird in eine auf 50°C erwärmte, quaderförmige Metallform eingebracht, die Form wird mit einem Metalldeckel geschlossen und die Reaktionsmischung schäumt auf.

A-Komponente

| Polyol B | 90 Gew.-Tle. |
|---|---|
| Polyol F | 10 Gew.-Tle. |
| Wasser | 3,0 Gew.-Tle. |
| Katalysator | 0,1 Gew.-Tle. |
| Katalysator 2 | 0,7 Gew.-Tle. |
| Katalysator 3 | 0,3 Gew.-Tle. |
| Katalysator 4 | 0,6 Gew.-Tle. |
| Stabilisator 1 | 0,6 Gew.-Tle. |

B-Komponente

MDI 82/15    Gemisch aus 67 Gew.-% 4,4' und 15 Gew.-% 2,4'-Diisocyanatodiphenylmethan und 18 Gew.-% höherfunktionellen Polyisocyanaten der Diphenylmethanreihe (Zweikernanteil 82 Gew.-%, 2,4'-Isomerenanteil 15 Gew.-%)

Der sich ergebende Polyurethan-Weichformschaumstoff hat folgende mechanische Eigenschaften:

Rohdichte    54 kg/m

(DIN 53420)

Rückprallelastizität    66 %

(DIN 53577)

Vergleichsbeispiel 1

100 Gew.-Tle. der A-Komponente werden mit 47,5 Gew.-Tln. der B-Komponente intensiv vermischt (Kennzahl 95). Die Reaktionsmischung wird in eine auf 50°C erwärmte, quaderförmige Metallform eingebracht, die Form wird mit einem Metalldeckel geschlossen, und die Reaktionsmischung schäumt auf.

A-Komponente

| Polyol B | 100 Gew.-Tle. |
|---|---|
| Wasser | 3,0 Gew.-Tle. |
| Katalysator 1 | 0,1 Gew.-Tle. |
| Katalysator 2 | 0,5 Gew.-Tle. |
| Katalysator 3 | 0,3 Gew.-Tle. |
| Katalysator 4 | 0,6 Gew.-Tle. |
| Stabilisator 2 | 0,5 Gew.-Tle. |

B-Komponente

MDI 82/15

Der sich ergebende Polyurethan-Weichformschaumstoff hat folgende mechanische Eigenschaften:

Rohdichte    54 kg/m

(DIN 53420)

Rückprallelastizität    48%

(DIN 53577)

Beispiel 2

100 Gew.-Tle. der A-Komponente werden mit 49,2 Gew.-Tln. der B-Komponente intensiv vermischt (Kennzahl 105). Die Reaktionsmischung wird in eine auf 50°C erwärmte, quaderförmige Metallform eingebracht, die Form wird mit einem Metalldeckel geschlossen, und die Reaktionsmischung schäumt auf.

A-Komponente

| Polyol B | 90 Gew.-Tle. |
|---|---|
| Polyol F | 10 Gew.-Tle. |
| Wasser | 2,5 Gew.-Tle. |
| Katalysator 1 | 0,1 Gew.-Tle. |
| Katalysator 2 | 0,7 Gew.-Tle. |
| Katalysator 3 | 0,3 Gew.-Tle. |
| Katalysator 4 | 0,6 Gew.-Tle. |
| Stabilisator 1 | 0,8 Gew.-Tle. |

B-Komponente

MDI 66/6 (Zweikernanteil 66 Gew.-%, 2,4'-Isomerenanteil    6 Gew.-%)

Der sich ergebende Polyurethan-Weichformschaumstoff hat folgende mechanische Eigenschaften:

Rohdichte    54 kg/m

(DIN 53420)

Rückprallelastizität    64 %

(DIN 53577)

Vergleichsbeispiel 2

100 Gew.-Tle. der A-Komponente werden mit 48,5 Gew.-Tln. der B-Komponente intensiv vermischt (Kennzahl 105). Die Reaktionsmischung wird in eine auf 50°C erwärmte, quaderförmige Metallform eingebracht, die Form wird mit einem Metalldeckel geschlossen, und die Reaktionsmischung schäumt auf.

A-Komponente

| Polyol A | 100 Gew.-Tle. |
|---|---|
| Wasser | 2,5 Gew.-Tle. |
| Katalysator 1 | 0,1 Gew.-Tle. |
| Katalysator 2 | 0,1 Gew.-Tle. |
| Katalysator 3 | 0,3 Gew.-Tle. |
| Katalysator 4 | 0,6 Gew.-Tle. |
| Stabilisator 1 | 0,1 Gew.-Tle. |

B-Komponente

MDI 66/6

Der sich ergebende Polyurethan-Weichformschaumstoff hat folgende mechanische Eigenschaften:

Rohdichte    54 kg/m

(DIN 53420)

Rückprallelastizität    54 %

(DIN 53577)

Beispiel 3

100 Gew.-Tle. der A-Komponente werden mit 42,5 Gew.-Tln. der B-Komponente intensiv vermischt (Kennzahl 95). Die Reaktionsmischung wird in eine auf 50°C erwärmte, quaderförmige Metallform eingebracht, die Form wird mit einem Metalldeckel geschlossen, und die Reaktionsmischung schäumt auf.

A-Komponente

| Polyol C | 75 Gew.-Tle. |
|---|---|
| Polyol D | 10 Gew.-Tle. |
| Polyol F | 15 Gew.-Tle. |
| Wasser | 2,5 Gew.-Tle. |

(fortgesetzt)

| | |
|---|---|
| Katalysator 2 | 0,5 Gew.-Tle. |
| Katalysator 6 | 1,0 Gew.-Tle. |
| Katalysator 5 | 0,1 Gew.-Tle. |
| Stabilisator 3 | 0,1 Gew.-Tle. |

B-Komponente

MDI 88/38 (Zweikernanteil 88 Gew.-%, 2,4'-Isomerenanteil 38 Gew.-%)

Der sich ergebende Polyurethan-Weichformschaumstoff hat folgende mechanische Eigenschaften:

Rohdichte    54 kg/m

(DIN 53420)

Rückprallelastizität    62 %

(DIN 53577)

Vergleichsbeispiel 3

100 Gew.-Tle. der A-Komponente werden mit 71,0 Gew.-Tln. der B-Komponente intensiv vermischt (Kennzahl 95). Die Reaktionsmischung wird in eine auf 50°C erwärmte, quaderförmige Metallform eingebracht, die Form wird mit einem Metalldeckel geschlossen, und die Reaktionsmischung schäumt auf.

A-Komponente

| | |
|---|---|
| Polyol C | 75 Gew.-Tle. |
| Polyol D | 10 Gew.-Tle. |
| Polyol F | 15 Gew.-Tle. |
| Wasser | 10 Gew.-Tle. |
| Katalysator 2 | 0,5 Gew.-Tle. |
| Katalysator 6 | 1,0 Gew.-Tle. |
| Katalysator 5 | 0,1 Gew.-Tle. |
| Stabilisator 3 | 0,5 Gew.-Tle. |

B-Komponente

MDI 88/38

Der sich ergebende Polyurethan-Weichformschaumstoff hat folgende mechanische Eigenschaften:

Rohdichte    36 kg/m

(DIN 53420)

Rückprallelastizität    40 %

(DIN 53577)
Dieser nach DE-OS 3 721 058 hergestellte Schaumstoff weist eine deutlich niedrigere Rückprallelastizität auf.

Beispiel 4

100 Gew.-Tle. der A-Komponente werden mit 44,5 Gew.-Tln. der B-Komponente intensiv vermischt (Kennzahl 100). Die Reaktionsmischung wird in eine auf 50°C erwärmte, quaderförmige Metallform eingebracht, die Form wird mit einem Metalldeckel geschlossen, und die Reaktionsmischung schäumt auf.

A-Komponente

| Polyol G | 90 Gew.-Tle. |
|---|---|
| Polyol E | 10 Gew.-Tle. |
| Wasser | 2,5 Gew.-Tle. |
| Katalysator 2 | 0,8 Gew.-Tle. |
| Katalysator 3 | 0,3 Gew.-Tle. |
| Katalysator 7 | 0,8 Gew.-Tle. |
| Stabilisator 2 | 0,5 Gew.-Tle. |
| Triethanolamin | 1,0 Gew.-Tle. |

B-Komponente

MDI 85/25 (Zweikernanteil 85 Gew.-%,
2,4'-Isomerenanteil 25 Gew.-%)

Der sich ergebende Polyurethan-Weichformschaumstoff hat folgende mechanische Eigenschaften:

Rohdichte     54 kg/m

(DIN 53420)

Rückprallelastizität     68 %

(DIN 53577)

**Patentansprüche**

**1.** Verfahren zur Herstellung von kalthärtenden Polyurethan-Weichformschaumstoffen durch Umsetzung von

a) Polyisocyanaten vom Typ des Diphenylmethandiisocyants mit einem Gehalt von 15 - 38 Gew.-% an 2,4'-Diphenylmethan-diisocyanat

b) Verbindungen mit mindestens zwei gegenüber Isocyanaten aktiven Wasserstoffatomen vom Molekulargewicht 400 bis 14.000 und gegebenenfalls

c) Kettenverlängerungs- und Vernetzungsmittel mit mindestens zwei gegenüber Isocyanaten aktiven Wasserstoffatomen vom Molekulargewicht 32 bis 399 in Gegenwart von

d) Wasser als Treibmittel und gegebenenfalls in Gegenwart von

e) anderen Treibmitteln, Katalysatoren und weiteren an sich bekannten Hilfs- und Zusatzmitteln

in einer geschlossenen Form, **dadurch gekennzeichnet, daß** man als Komponente b) ein Gemisch enthaltend

1. 5 bis 30 Gew.-% eines mindestens zwei Hydroxylgruppen aufweisenden Polyethers einer OH-Zahl < 150 und einem Ethylenoxid-Gehalt von mindestens 50 Gew.-% (bezogen auf Gesamtalkylenoxid) und

2. 70 bis 95 Gew.-% eines mindestens zwei Hydroxylgruppen aufweisenden Polyethers einer OH-Zahl 14 bis 50 und einem Ethylenoxidgehalt von 5 bis 25 Gew.-% (bezogen auf Gesamtalkylenoxid)

und als Komponente d) Wasser in einer Menge von 2 bis 3 Gew.-%, bezogen auf Komponente b), verwendet, wobei die Umsetzung bei einer Kennzahl von 80 bis 120 erfolgt.

**2.** Verfahren gemäß Anspruch 1, **dadurch gekennzeichnet, daß** die Komponente b) mit dem Polyisocyanat a) in einer Vorreaktion ganz oder teilweise zu einem Semipräpolymer oder Präpolymer umgesetzt wird.

**3.** Verfahren gemäß Ansprüchen 1 und 2, **dadurch gekennzeichnet, daß** die Umsetzung bei einer Kennzahl von 95 bis 105 erfolgt.

**4.** Verfahren gemäß Ansprüchen 1 bis 3, **dadurch gekennzeichnet, daß** die Funktionalität der Komponente b)2 zwischen 3 und 6 liegt.

## Claims

**1.** Process for the preparation of moulded cold-cure polyurethane flexible foams by reacting

a) polyisocyanates of the diphenylmethane diisocyanate type containing from 15 to 38 wt.% of 2,4'-diphenylmethane diisocyanate,

b) compounds having at least two hydrogen atoms which are capable of reacting with isocyanates, of a molecular weight of from 400 to 14,000 and optionally

c) agents which increase chain length and crosslinking agents having at least two hydrogen atoms which are capable of reacting with isocyanates, of a molecular weight of from 32 to 399 in the presence of

d) water as blowing agent and optionally in the presence of

e) other blowing agents, catalysts and further auxiliary substances and additives, which are known per se

in a sealed mould, **characterised in that** as component b) a mixture comprising

1. from 5 to 30 wt.% of a polyether having at least two hydroxyl groups, of OH number < 150 and having an ethylene oxide content of at least 50 wt.% (calculated on total alkylene oxide) and

2. from 70 to 95 wt.% of a polyether having at least two hydroxyl groups, of OH number from 14 to 50 and having an ethylene oxide content of from 5 to 25 wt.% (calculated on total alkylene oxide)

and as component d) water in a quantity of f rom 2 to 3 wt.%, calculated on component b), is used, wherein the reaction takes place at an index of from 80 to 120.

**2.** Process according to Claim 1, **characterised in that** component b) is reacted completely or partially with the polyisocyanate a) in,a pre-reaction to form a semi-prepolymer or prepolymer.

**3.** Process according to Claims 1 and 2, **characterised in that** the reaction takes place at an index of from 95 to 105.

**4.** Process according to any of Claims 1 to 3,
**characterised in that** the functionality of component b) 2 lies between 3 and 6.

## Revendications

**1.** Procédé pour la préparation de mousses souples en polyuréthane de moulage durcissant à froid, par mise en réaction:

a) de polyisocyanates du type du diphénylméthane-diisocyanate possédant une teneur en 2,4'-diphénylméthanediisocyanate de 15 à 38% en poids.

b) de composés contenant au moins deux atomes d'hydrogène actifs vis-à-vis des isocyanates, d'un poids moléculaire de 400 à 14.000, et éventuellement

c) de promoteurs d'allongement de chaînes et de promoteurs de réticulation contenant au moins deux atomes d'hydrogène actifs vis-à-vis des isocyanates, d'un poids moléculaire de 32 à 399, en présence

d) d'eau comme agent porogène et éventuellement en présence

e) d'autres agents moussants, de catalyseurs et d'autres adjuvants et additifs connus en soi

dans un moule fermé, **caractérisé en ce qu'**on utilise pour le composant b) un mélange contenant:

1. de 5 à 30% en poids d'un polyéther présentant au moins deux groupes hydroxyle, à indice OH < 150 et une teneur en oxyde d'éthylène d'au moins 50% en poids (rapportés à la teneur totale en oxyde d'alkylène) et

2. de 70 à 95% en poids d'un polyéther présentant au moins deux groupes hydroxyle, à indice OH de 14 à 50 et une teneur en oxyde d'éthylène de 5 à 25% en poids (rapportés à la teneur totale en oxyde d'alkylène)

et pour le composant d) de l'eau en une quantité de 2 à 3% en poids par rapport au composant b), la mise en réaction ayant lieu à une valeur caractéristique de 80 à 120.

2. Procédé selon la revendication 1, **caractérisé en ce qu'**une opération préalable fait réagir totalement ou partiellement le composant b) avec le polyisocyanate a) pour obtenir un semi-prépolymère ou un prépolymère.

3. Procédé selon les revendications 1 et 2, **caractérisé en ce qu'**on effectue la mise en réaction à une valeur caractéristique de 95 à 105.

4. Procédé selon les revendications 1 à 3, **caractérisé en ce que** la fonctionnalité du composant b)2 se situe entre 3 et 6.